# EUROPEAN PATENT SPECIFICATION

(11) **EP 4 037 083 B1**
(45) Date of publication and mention of the grant of the patent: **03.07.2024**
(21) Application number: 21154717.9
(22) Date of filing: 02.02.2021
(51) Int. Cl.: H01M 50/242, H01M 50/249, B60K 1/04, B60L 3/00, B60L 50/60, B60L 50/64

(54) **PROTECTION ASSEMBLY AND BATTERY HOUSING COMPRISING THE SAME**
SCHUTZANORDNUNG UND BATTERIEGEHÄUSE DAMIT
ENSEMBLE DE PROTECTION ET BOÎTIER DE BATTERIE LE COMPRENANT

(43) Date of publication of application: 03.08.2022
(73) Proprietor: Samsung SDI Co., Ltd., Yongin-si, Gyeonggi-do 17084 (KR)
(72) Inventor: Binder, Daniel, 8430 Leibnitz (AT)
(74) Representative: Gulde & Partner

(56) References cited:
- CN-U- 207 587 788
- CN-U- 209 395 571
- DE-A1-102011 003 535
- US-A1- 2005 008 931
- US-A1- 2017 288 185

## Description

### Field of the Invention

The present invention relates to a protection assembly. Further, the present invention relates to a battery housing including said protection assembly. Further, the present invention relates to a battery system including a battery housing and a vehicle with such battery system in an underbody part of the vehicle.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator. Furthermore, the vehicle may include a combination of electric motor and conventional combustion engine. In general, an electric-vehicle battery (EVB) or traction battery is a battery used to power the propulsion of battery electric vehicles (BEVs). Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy density, in particular for motor driving of a hybrid vehicle. That is, the battery module is formed by interconnecting the electrode terminals of the plurality of unit battery cells depending on a required amount of power and in order to realize a high-power rechargeable battery.

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

The mechanical integration of such a battery pack requires appropriate mechanical connections between the individual components, e.g. of battery modules, and between them and a supporting structure of the vehicle. These connections must remain functional and save during the average service life of the battery system. Further, installation space and interchangeability requirements must be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The framework is usually made of aluminum or an aluminum alloy to lower the total weight of the construction.

The CN 209395571U discloses a battery pack assembly system in which a battery pack body can be slid on a bracket each having members to allow the sliding and are connected through fixing holes on a connecting plate of the bracket and fixing holes on a fixing riser of the battery pack body.

The CN 207587788U discloses pull-out type automobile battery box with a mounting base, wherein the mounting base comprises grooves with rotating balls and the battery box comprises corresponding slides to provide a sliding mechanism.

The DE 10 2011 003 535 A1 discloses a spanning device to span a cooler against a battery for providing a more effective cooling and a connection plate. The connection plate includes shoes and the spanning sheet includes a plurality of recesses to which the shoes are coupled.

The US 2017/288185 A1 deals with a method of securing a battery pack to an underbody of a vehicle. In an engaged position, a flange is positioned against a floor of a bracket to block vertical movement of the battery pack downward away from the underbody.

Battery systems according to the prior art, despite any modular structure, usually comprise a battery housing that serves as enclosure to seal the battery system against the environment and provides structural protection of the battery system's components. Housed battery systems are usually mounted as a whole into their application environment, e.g. an electric vehicle. Thus, the replacement of defect system parts, e.g. a defect battery submodule, requires dismounting the whole battery system and removal of its housing first. Even defects of small and/or cheap system parts might then lead to dismounting and replacement of the complete battery system and its separate repair. As high-capacity battery systems are expensive, large and heavy, said procedure proves burdensome and the storage, e.g. in the mechanic's workshop, of the bulky battery systems becomes difficult.

Housed battery systems for vehicles are often positioned in an underbody part of the vehicle. In such a position the battery system can be exposed to loads which can damage the battery housing and the battery components of the battery system accommodated therein.

For example, a typical scenario is that a vehicle with a battery in an underbody part is lifted with a lifting jack at the position where the battery system is placed. Such static load may for example involve forces of 10 kN exerted on the battery housing. In another example scenario, an object/obstacle is hit by the vehicle which may result in dynamic loads with more than 100 kN exerted on the battery housing.

The bottom cover of the battery housing alone is not sufficient to absorb the forces which are imposed on the battery housing and the battery system. Therefore, an additional protection member can be placed below the bottom cover of the battery housing.

Problematic is, however, that due to the protection member the battery housing and the internal components cannot be reached in a practical manner. This may result in that an exchange in a common repair shop may not or not be easily possible without opening the battery pack itself.

It is thus an object of the present invention to overcome or reduce at least some of the drawbacks of the prior art and to provide a protection assembly which can be readily assembled and disassembled but still provides safety and stiffness to protect the battery system from mechanical loads which may damage the battery housing and/or components thereof and which provide strong and stable coupling. Further solved objects may become clearer in the following description.

### Summary of Invention

Embodiments of the present disclosure seek to solve at least one of the problems existing in the prior art to at least some extent.

In particular, a battery housing according to the invention is provided in appended claim 1.

A protection assembly may be in other words a protection system. The bottom cover may comprise a base sheet. The bottom cover may be of plastic. In other words, in the coupled state, the bottom cover may be on the protection member. The first coupling members may be provided individually and also the second coupling members may be provided individually. A direction along the bottom cover may imply that the motion is lateral to the bottom cover, i.e. the base sheet. The coupled state may be reached when each of the first coupling members engages with its partner, i.e. the corresponding second coupling member. The term face each other may mean in other words oppose each other. The protection member may as well comprise a base sheet. The protection member may comprise a suitable material, preferably steel, to provide stiffness and absorb impact energy. The word engage may be in other words mean that the coupling members hook with each other in the coupled state. The protection member may also be referred to as an underbody protection member.

The present invention provides a bottom protection system for a battery which can be readily assembled. In particular, the protection assembly, when used in an underbody part of a vehicle, can be readily assembled since the assembling requires a lateral movement into a first direction along the bottom cover. Therefore, required vertical space of the protection assembly is reduced which is beneficial when the protection assembly is used in said underbody part of a vehicle. Thus, an assembly of the protection member can be performed readily in a common repair workshop. Due to the plurality of individual coupling elements a stable coupling between the bottom cover and the protection member is reached due to the sum of coupling forces acting at each coupling point. The protection member can then protect the battery, in particular a plurality of battery cells or a battery system which can be disposed on the bottom cover, from external loads imposed to the bottom of the bottom cover.

Preferably, the first and the second coupling members may be adapted such that the protection member is mechanically decoupled from the bottom cover by sliding the protection member in a second direction opposite to the first direction along the bottom cover. The advantage is that by a reverse motion, the protection member can readily be disassembled. Merely some plastic deformation forces may have to be overcome in order to release the protection member from the bottom cover of the battery housing. The protection assembly can thus be conveniently exchanged, i.e. coupled, decoupled, coupled etc., while required vertical space is saved or in other words reduced.

One among the first coupling members and the second coupling members comprises openings and the other one among the first coupling members and the second coupling members comprises flaps, wherein each flap engages with a corresponding opening in the coupled state. Due to the plurality of engaging flaps and openings a particularly stable coupled state may be formed which increases safety and stability. Here it is meant that each first coupling member comprises one of a flap and the opening, and each second coupling member comprises the other one of the flap and the opening. Thus, a layer of a plurality of openings and a layer of a plurality of flaps is formed in the coupling zone between the bottom cover and the protection member.

Preferably, the openings are arranged in one or more parallel rows and the flaps are arranged in a same number of parallel rows, wherein the rows overlap with each other in the coupled state. A sequence of neighboring coupling points may thus be generated to increase the coupling strength. The distance between neighboring coupling members of one row may refer to a maximum sliding distance to reach an aligned overlap of the bottom cover and the protection member. A matrix of coupling points arranged in several overlapping pairs of rows may be implemented.

Preferably, the openings may be formed in first cross members and the flaps are formed in second cross members, which extend perpendicular to each other in the coupled state. The cross members may have the advantage that the cross members may readily absorb impact energy with deforming the bottom cover or the internal components of the battery housing. The perpendicular arrangement may lead to improved stiffness and improved stability. In the present context, a cross member may also comprise a lengthwise extension and not only widthwise extension. A cross member may be in other words a cross beam.

The first cross members and the second cross members comprise hollow profiles. Due to the hollow profiles, impact forces can be absorbed by the cross members limiting the impact on the bottom cover of the housing and the battery. Deformation of the battery and/or the battery housing may be prevented.

Preferably, the first cross members may comprise contact portions connected with the corresponding surface and a protruding portion forming the hollow profile, wherein the opening may be formed in the protruding portion such that the corresponding flap passes through the opening and the protruding portion overlaps with the flap in the coupled state. The openings may be obtained by punching holes into the protruding portions of the first cross members. The opening may also be referred to as a slot. Thus, the flap prevents the protruding portion of the protection member from being released, such that a coupled state is reached by lateral motion.

The protruding portion may comprise a planar portion which is parallel to the corresponding surface, wherein the flap is formed to contact the planar portion such that at least a part of the flap is between the planar portion and the corresponding surface in the coupled state. Vertical motion is prevented by the flap in the coupled state.

The flaps in the second cross member may be formed to comprise a stepped portion and a planar portion connected to the stepped portion, the planar portion may comprise an open side opposite to the stepped portion. The flaps may thus form a depressed portion due to the stepped portion.

In a preferred embodiment, the second cross members may comprise an offset formed between the open side of the planar portion and a base portion of the second cross member. An offset may in other words be a spaced misalignment. This allows to the protruding portion to enter the offset to engage with the flap.

Preferably, the protruding portion of the first cross member may pass through the offset to overlap with the flap in the coupled state. Thus, the flap prevents the protruding portion of the protection member from being released, such that a coupled state is reached by lateral motion.

The first cross member may be welded to the bottom cover and the second cross member may be welded to the protective member. Thus, the cross members may be fixed in stable manner to the respective bottom cover and the respective protective member.

The battery housing comprises a protection assembly according to one of the above embodiments. The same advantages as above may be present also for the battery housing.

In yet another aspect, a battery system including a battery housing according to one of the above embodiments is disclosed.

In yet another aspect, a vehicle including a battery system according to one of the above embodiments and positioned in an underbody of the vehicle is disclosed. The same advantages as above may be present also for the battery housing.

Further aspects of the present invention could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic view of a protection assembly in a decoupled state according to an embodiment of the invention;
- Fig. 2: illustrates a schematic top view of a protection assembly in a coupled state according to an embodiment of the invention;
- Fig. 3: illustrates a schematic bottom view of a protection assembly in a coupled state according to an embodiment of the invention;
- Fig. 4: illustrates a schematic cross section A of a protection assembly in a coupled state according to an embodiment of the invention; and
- Fig. 5: schematically illustrates a vehicle according to an embodiment of the invention.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. As used herein, the term "and/or" includes any and all combinations of one or more of the associated listed items. Further, the use of "may" when describing embodiments of the present invention refers to "one or more embodiments of the present invention."

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention.

In the following description of embodiments of the present invention, the terms of a singular form may include plural forms unless the context clearly indicates otherwise.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present invention should not be construed as being limited thereto.

Unless otherwise noted, like reference numerals denote like elements throughout the attached drawings and the written description, and thus, descriptions thereof will not be repeated. In the drawings, the relative sizes of elements, layers, and regions may be exaggerated for clarity.

Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features.

It will be understood that when an element or layer is referred to as being "on," "connected to," or "coupled to" another element or layer, it can be directly on, connected to, or coupled to the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

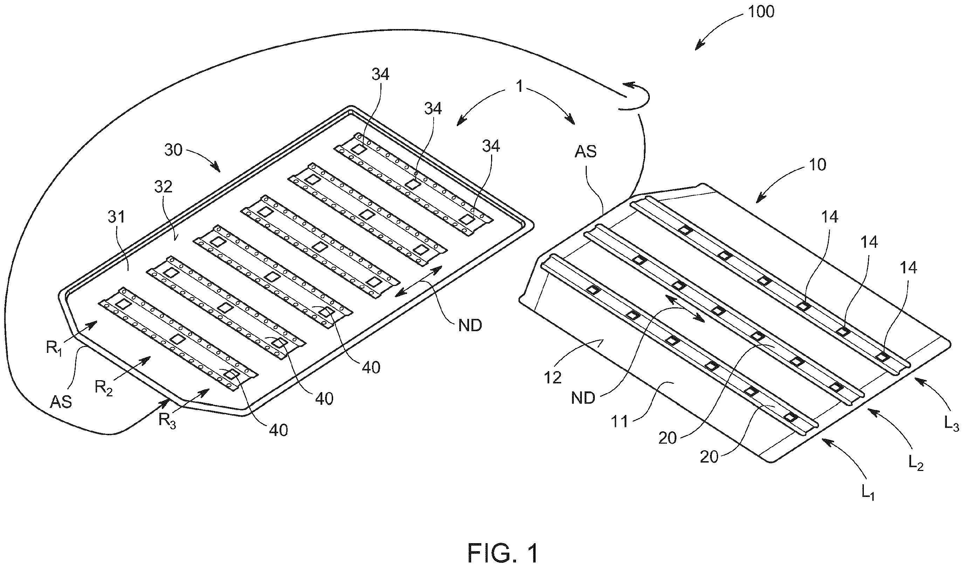

Figs. 1-4 show various states and views of an embodiment of the protection assembly 1 according to the present invention, which will be described in parallel in the following by referencing to particular Figures for illustration of the various features of the present invention.

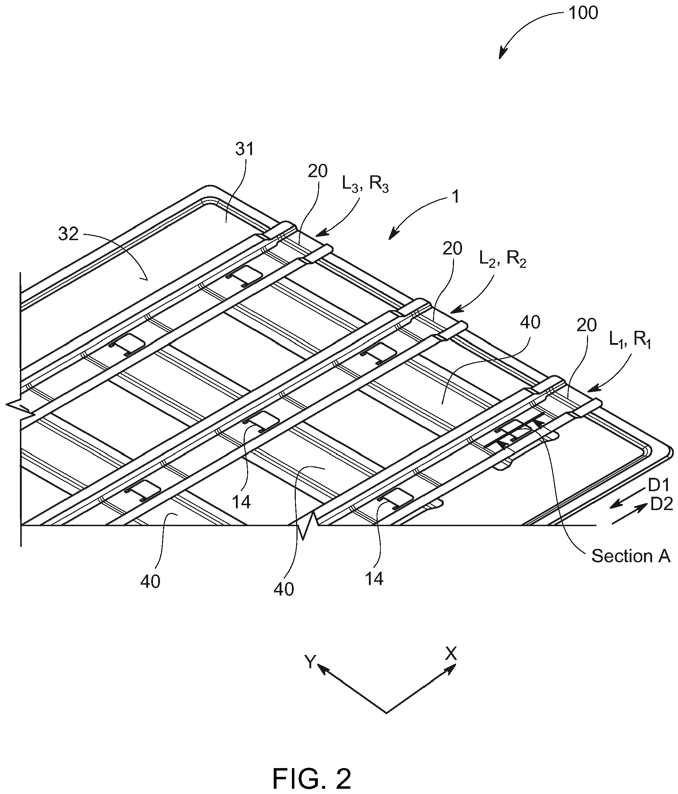

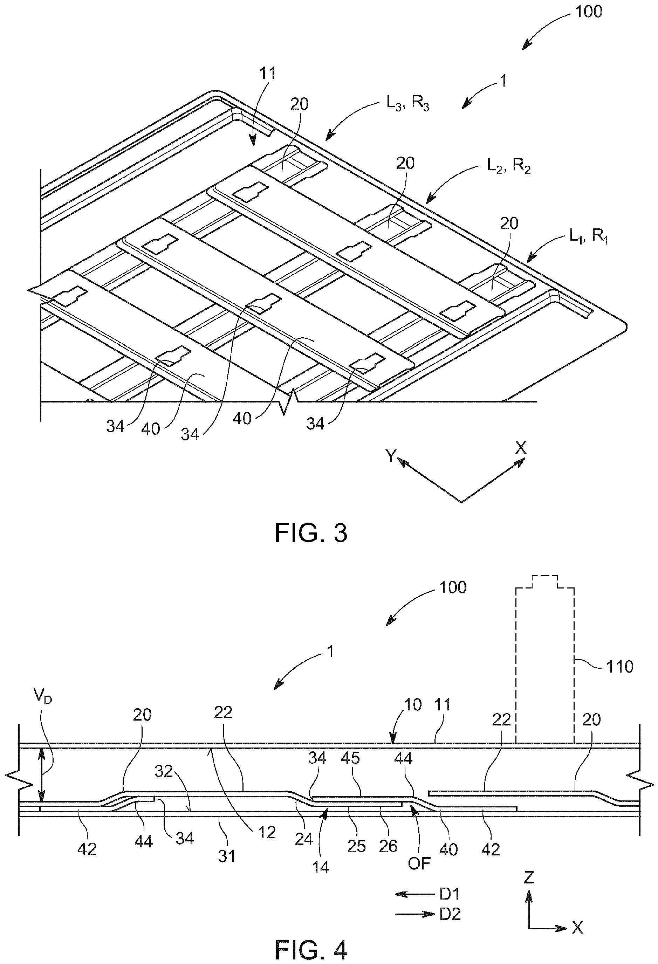

Fig. 1 shows a schematic view of a protection assembly 1 in a decoupled state according to an embodiment of the invention. Fig. 2 shows a protection assembly 1 in a coupled state according to an embodiment of the invention from a top view perspective. In this top view perspective, a base sheet 11 of a bottom cover 10 is omitted only to illustrate the coupling when viewed from this perspective. Fig. 3 shows a protection assembly 1 in a coupled state according to an embodiment of the invention from a bottom view perspective. In this bottom view perspective, a base sheet 31 of the protection member 30 is omitted only to illustrate the coupling when viewed from this perspective. Fig. 4 shows a schematic cross section A as indicated in Figure 2 of the protection assembly 1 in a coupled state according to an embodiment of the present invention including the base sheet 11 of the bottom cover 10 and the base sheet 3 of the protection member 30.

Fig. 1 shows a protection assembly 1 for protecting the bottom of a battery or battery system. In Fig. 1, the protection assembly 1 is shown in the decoupled state, while in the Figs. 2-4 the protection assembly 1 is viewed in the coupled state from different perspectives and/or cross sections. In Fig. 1, the coupled state between the protection member 30 and the bottom cover 10 is illustrated by a schematic connecting arrow. It is further indicated that the coupled state may be reached by a flip such that coupling members face each other as illustrated further below, for example in Fig. 4.

The protection assembly 1 comprises a bottom cover 10. The bottom cover 10 is part of a battery housing 100. Only for brevity purposes, further parts of the battery housing 100 may be omitted here. For example, here not shown, a plurality of battery components, in particular battery cells 110 and/or battery modules, a battery pack, control electronics, interfaces, a fuse etc. may be disposed on the bottom cover 10 and/or accommodated by the battery housing 100. The bottom cover 10 may comprise a base sheet 11, e.g. a planar sheet, which forms the base substrate of the bottom cover 10. The bottom cover 10 may for example comprise a plastic material, but the invention is not restricted thereto.

The protection assembly 1 further comprises a protection member 30. The protection member 30 is provided separately from the bottom cover 10 in the uncoupled state as shown in Fig. 1. Figs. 2 to 4 show the protection assembly 1, when the bottom cover 10 and the protection member 30 are in the coupled state.

In the coupled state, as shown in the top view perspective of Fig. 2 or the cross section A in Fig. 4, the protection member 30 is positioned below the bottom cover 10. The protection member 30 may comprise a base sheet 31, i.e. a planar sheet. It is noted here again that in Fig. 2 the base sheet 11 of the bottom cover 10 is omitted to illustrate the coupling when viewed from the top view perspective. The material of the base sheet 31 may be selected to provide stiffness and be suitable to absorb the exerted loads acting on the protection member 30. Preferably, steal is used as material. Therefore, the protection member 30 may protect the bottom of the battery from damage and/or deformation due to imposed static and dynamic loads.

The bottom cover 10 comprises a plurality of first coupling members, in Fig. 1 illustrated by reference sign 14. The plurality of first coupling members is formed on a first surface 12 of the bottom cover 10. The first coupling members may be individually, i.e. independently or separately, provided from each other as illustrated in Fig. 1 and also in the Figs. 2 to 4.

Also, the protection member 30 comprises a plurality of second coupling members, in Fig. 1 illustrated by reference sign 34. The plurality of second coupling members is formed on a second surface 32 of the protection member 30. The second coupling members may be individually provided from each other as illustrated in Fig. 1 and also in the Figs. 2 to 4, i.e. they may be spatially separated from each other.

The first and second surface 12, 32 face each other in the coupled state, as can be seen in the cross section A in Fig. 4, wherein the cross section A is indicated in Fig. 2. In other words, the first and second coupling members face each other in the coupled state. That is, each of the first and second coupling members are formed between the base sheets 11, 31 of the bottom cover 10 and the protection member 30, respectively, see here as well the cross section in Fig. 4.

From the uncoupled state as shown in Fig. 1, the protection member 30 and the bottom cover 10 can be slid into the coupled state due to features of the coupling members as described in the following. The first and second coupling members are adapted such that the protection member 30 is mechanically coupled to the bottom cover 10 by sliding the protection member 30 in a first direction D1 along the bottom cover 10. Along the bottom cover 10 may be a lateral motion in contact with the bottom cover 10, i.e. the base sheet 11. The sliding movement results in the coupled state when each of the second coupling members engage, in particular hook, with corresponding first coupling members. The first direction D1, i.e. the coupling direction, is illustrated in the Figures 2 and 4 in which the coupled state is shown. The plurality of individual coupling members leads to a strong coupling force as a sum of the individual coupling forces.

Thus, the invention allows to assemble the protection member 30 to the bottom cover 10 by a lateral motion. Such assembling reached by the coupling members saves vertical space, in particular when the protection assembly 1 is placed in an underbody of a vehicle. Further, the assembling of the bottom cover 10 and the protection member 30 is conveniently fast and does not require an advanced tool set.

The first and the second coupling members are adapted such that the protection member 30 may be mechanically decoupled from the bottom cover 10 by sliding the protection member 30 in a second direction D2 as indicated in the Figs. 2 and 4. The second direction D2 is opposite to the first direction D1 along the bottom cover 10. Thus, the protection member 30 is readily exchangeable by a sliding motion, which can be performed in a common repair workshop.

In the present case, as can be seen in Fig. 1 and also the remaining Figures, the first coupling members of the bottom cover 10 may comprise flaps 14, i.e. each first coupling member may comprise a flap 14 as can be seen e.g. in Fig. 1. The second coupling members may comprise openings 34, i.e. each of the second coupling members may comprise an opening 34, see e.g. the Fig. 1 or the remaining Figures 2 to 4. Thereby, each flap 14 may engage with a corresponding opening 34 in the coupled state, as can be seen in particular in Fig. 2. The coupling system using flaps 14 and openings 34 may lead to stability and safety.

In another embodiment of the invention, not explicitly shown in the Figures, the openings 34 and the flaps 14 may be reversed, i.e. the first coupling members may comprise the openings and the second coupling members may comprise the flaps. This symmetry applies as well to the more detailed description in the following and is readily understood by the person skilled in the art. However, for ease of description, only the first case will be described in more detail.

The openings 34 may be arranged in one or more parallel rows R1, R2, R3, here for example three, but the invention is not restricted thereto. Also the flaps 14 may be arranged in one or more parallel rows L1, L2, L3, wherein a number of rows may be preferably identical to the rows R1, R2, R3. The rows R1, R2, R3; L1, L2, L3 may overlap with each other in the coupled state, see for example the Figs. 2 and 3. The distance between consecutive coupling members of one row R1, R2, R3; L1, L2, L3 may be equidistant. The neighboring distance ND may be the maximum sliding distance required to reach the coupled state. The protection member 30 and the bottom cover 10 may further have an atypically formed side AS, the atypically formed side AS, in contrast to the flat side, may improve the alignment of the protection member 30 with the bottom cover 10 to reach the coupled state.

In the present preferred embodiment, the flaps 14 are formed in first cross members 20. The openings 34 are formed in second cross members 40, see Fig. 1 or Fig. 2. The cross members 20, 40 may be made of metal, in particular of steel to provide impact absorbance. The first and second cross members 20, 40 may extend perpendicular to each other in the coupled state. This can be seen, for example, in Fig. 2. The cross members 20, 40 may absorb impact forces and may provide the openings 34 and the flaps 14. Due to the perpendicular array of cross members crossing each other, higher stability and impact absorbance may be generated by this structure.

In the following, the cross members 20, 40 will be described in more detail, in particular referring to Fig. 4 which shows a cross section A as indicated in Fig. 2 at a coupling point between an opening 34 and a corresponding flap 14.

The first cross members 20 and the second cross members 40 comprise hollow profiles, see Fig. 4, to absorb impacts exerted from the bottom side. For example, a vertical distance V_{D} between the first cross member 20, i.e. a base portion 22 thereof, and the bottom sheet 11 may therefore be provided. Similarly, vertical space is also provided for the second cross member 40. The second cross member 40 may be made of steel to provide stiffness against deformation.

The second cross members 40 may comprise contact portions 42 which are connected with the second surface 32. The second cross members 40 may be welded to the second surface 32 of the protection member 30 at the contact portions 42.

The second cross members 40 may comprise protruding portions 44. The protruding portions 44 may form the hollow profile of the second cross member 40. In other words, a hollow space is formed below the protruding portions 44 and between the second surface 32, i.e. the base sheet 31.

The opening 34 may be formed in the protruding portions 44. The protruding portions 44 may thus include the openings 34. The corresponding flap 14 may pass through the opening 34 such that the protruding portion 44 overlaps with the flap 14, preferably being in direct contact as shown in Fig. 4 in the coupled state. The overlapping protruding portions 44 can be seen in the top view perspective of Fig. 2 as well as in the cross section of Fig. 4. That is, the flap 14 may be below the protruding portion 44 in the coupled state. On the other side of the opening 34 opposite to the flap 14, the first cross member 20 may be on the protruding portion 44, see left side in Fig. 4. The flap 14 and the opening 34 thus hook or entangle with each other. The flap 14 thus may prevent the protruding portion 44 of the protection member 30 from being released, such that a coupled state is reached by the sliding motion.

The protruding portion 44 may comprises a planar portion 45 which may be parallel to the second surface 32, i.e. the base sheet 31 of the protection member 30 in the coupled state. The flap 14 may be formed to contact the planar portion 45 from below. This feature may be seen in the bottom view of Fig. 3 as well as in Fig. 4. Then, at least a part of the flap 14 is positioned between the planar portion 45 and the second surface 32 in the coupled state.

The flaps 14 in the first cross member 20 may be formed to comprise a stepped portion 24. The stepped portion 24 may be stepped with respect to the base portion 22, i.e. a planar base portion, of the first cross member 20. The flaps 14 may further comprise a planar portion 25 connected to the stepped portion 24. The planar portion 25 may be parallel to the base portion 22. The planar portion 25 may comprise an open side 26. The open side 46 may be opposite to the stepped portion 24. The stepped portion 24 may be stepped with respect to the base portion 22 towards the opposite (second) surface 32.

The first cross members 20 may comprise an offset OF, i.e. a misalignment here for example vertically and laterally, formed between the open side 26 of the planar portion 25 of the flap 14 and a base portion 22 of the first cross member 20.

The protruding portion 44, in particular the planar portion 45, of the second cross member 40 may then pass through the offset OF in the coupled state to overlap with the flap 14 in the coupled state. By sliding along the first direction D1, the protruding portion 44 may pass through the offset OF formed by the flap 14. Thus, the flap 14 prevents the protruding portion 44 of the protection member from being released to reach the coupled state. The flap 14 may be in direct contact with the protruding portion. An entangled or hooked structure of the protruding portions 44, the opening 34 and the flaps 14 is created in the coupled state by the features of the present invention.

For decoupling the protection member 30, the protruding portion 44 may be slid in the second direction D2 through the offset OF to reach the decoupled state. Also, the first cross members 20 may be welded to the protective member 30, here not shown.

A screw connection, here not explicitly shown, may further be provided to stabilize the coupled state. Preferably, the screw connection may be provided at a portion at which the first and second cross members 20, 40 contact each other at a contact portion 42, see e.g. Fig. 4. However, due to the mechanical coupling of the present invention, the number of screws may be reduced or even entirely omitted.

The present embodiment describes as well a battery housing 100 with such protection assembly 1. In particular, the battery housing 100 may be configured to accommodate a plurality of battery cells 110 disposed on the bottom cover 10. An exemplary battery cell 110 of a plurality of battery cells is schematically illustrated. Further, not shown explicitly, a battery system may be disclosed with such battery housing 100.

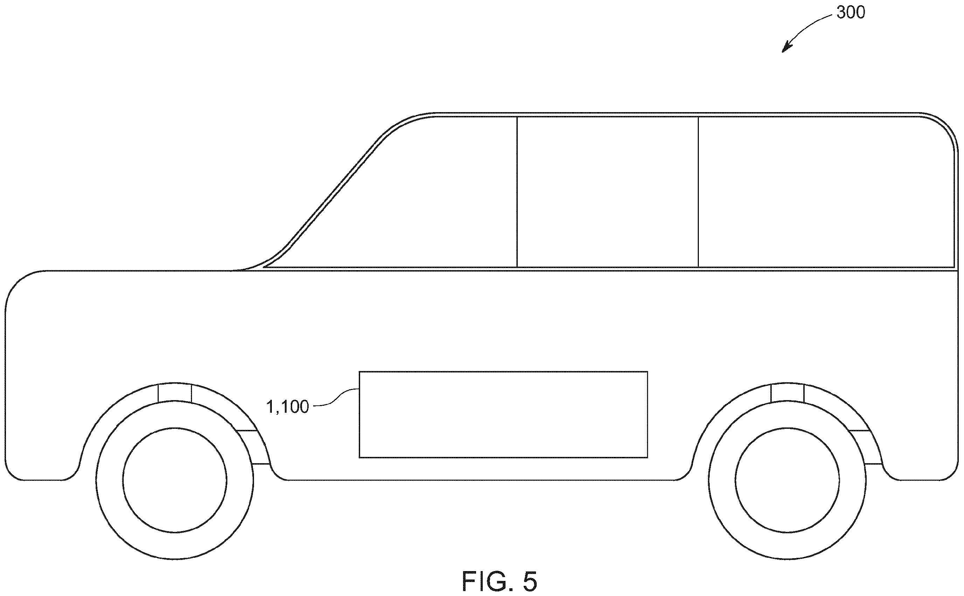

Figure 5 shows a vehicle according to the present invention is shown. The vehicle comprises a battery system positioned in an underbody of the vehicle 300. The battery system may comprise a battery housing 100 according to one of the above descriptions. The protection member may be readily exchangeable by a lateral motion. Further advantages are disclosed in the previous parts.

### Reference signs

- 1: protection assembly

- 10: bottom cover
- 11: base sheet
- 12: first surface
- 14: flap

- 20: first cross members
- 22: base portion
- 24: stepped portion
- 25: planar portion
- 26: open side

- 30: protection member
- 31: base sheet
- 32: second surface
- 34: opening

- 40: second cross members
- 42: contact portion
- 44: protruding portion
- 45: planar portion
- L1, L2, L3: first row
- R1, R2, R3: second row

- D1: first direction
- D2: second direction

- VD: vertical distance
- ND: neighboring distance
- OF: offset
- AS: atypical side

- 100: battery housing
- 110: battery cell

- 300: vehicle

## Claims

1. Battery housing (100), comprising:
- a bottom cover (10);
- a protection member (30) which is below the bottom cover (10) in a coupled state;
wherein the bottom cover (10) comprises a plurality of first coupling members formed on a first surface (12) of the bottom cover (10) and the protection member (30) comprises a plurality of second coupling members formed on a second surface (32) of the protection member (30), the first and second surface (12, 32) face each other in the coupled state, and the first and second coupling members are adapted such that the protection member (30) is mechanically coupled to the bottom cover (10) by sliding the protection member (30) in a first direction (D1) along the bottom cover (10) until each of the second coupling members engage with corresponding first coupling members;
**characterized in that**;
one among the first coupling members and the second coupling members comprises openings (34) and the other one among the first coupling members and the second coupling members comprises flaps (14), wherein each flap (14) engages with a corresponding opening (34) in the coupled state;
wherein the flaps (14) are formed in first cross members (20) and the openings (34) are formed in second cross members (40); and
the first cross members (20) and the second cross members (40) comprise hollow profiles.

2. The battery housing (100) of claim 1, wherein the first and the second coupling members are adapted such that the protection member (30) is mechanically decoupled from the bottom cover (10) by sliding the protection member (30) in a second direction (D2) opposite to the first direction (D1) along the bottom cover (10).

3. The battery housing (100) of one of the claims 1 to 2, wherein the openings (34) are arranged in one or more parallel rows (R1, R2, R3) and the flaps (14) are arranged in a same number of parallel rows (L1, L2, L3), wherein the rows (R1, R2, R3; L1, L2, L3) overlap with each other in the coupled state.

4. The protection assembly (1) of any one of the claims 3 to 4, wherein the first cross members (20) and the second cross members (40) extend perpendicular to each other in the coupled state.

5. The battery housing (100) of one of the claims 1 to 4, wherein the second cross members (40) comprise contact portions (42) connected with the corresponding surface (32) and a protruding portion (44) forming the hollow profile, wherein the opening (34) is formed in the protruding portions (44) such that the corresponding flap (14) passes through the opening (34) and the protruding portion (44) overlaps with the flap (14) in the coupled state.

6. The battery housing (100) of claim 5, wherein the protruding portion (44) comprises a planar portion (45) which is parallel to the corresponding surface (32), wherein the flap (14) is formed to contact the planar portion (45) such that at least a part of the flap (14) is between the planar portion (45) and the corresponding surface (32) in the coupled state.

7. The battery housing (100) of any one of the claims 1 to 6, wherein the flaps (14) in the first cross member (20) are formed to comprise a stepped portion (24) and a planar portion (25) connected to the stepped portion (24), the planar portion (25) comprising an open side (26) opposite to the stepped portion (24).

8. The battery housing (100) of claim 7, wherein the first cross members (20) comprise an offset (OF) formed between the open side (26) of the planar portion (25) and a base portion (22) of the first cross member (20).

9. The battery housing (100) of claim 8, wherein the protruding portion (44) of the second cross member (40) passes through the offset (OF) to overlap with the flap (14) in the coupled state.

10. The battery housing (100) of any one of the claims 1 to 9, wherein the first cross member (20) is welded to the bottom cover (10) and the second cross member (40) is welded to the protective member (30).

11. A battery system including a battery housing (100) according to one of the claims 1 to 10.

12. A vehicle (300) comprising a battery system according to claim 11 positioned in an underbody of the vehicle (300).

## Patentansprüche

1. Batteriegehäuse (100), umfassend:
- eine untere Abdeckung (10);
- ein Schutzelement (30), das sich in einem gekoppelten Zustand unter der unteren Abdeckung (10) befindet;
wobei die untere Abdeckung (10) eine Mehrzahl von ersten Kopplungselementen umfasst, die auf einer ersten Fläche (12) der unteren Abdeckung (10) ausgebildet sind, und das Schutzelement (30) eine Mehrzahl von zweiten Kopplungselementen, die auf einer zweiten Fläche (32) des Schutzelements (30) ausgebildet sind, umfasst, wobei die erste und zweite Fläche (12, 32) einander in dem gekoppelten Zustand zugewandt sind, und die ersten und zweiten Kopplungselemente dazu ausgelegt sind, dass das Schutzelement (30) mechanisch mit der unteren Abdeckung (10) gekoppelt wird, indem das Schutzelement (30) in einer ersten Richtung (D1) entlang der unteren Abdeckung (10) verschoben wird, bis jedes der zweiten Kopplungselemente mit entsprechenden ersten Kopplungselementen in Eingriff kommt;
**dadurch gekennzeichnet, dass**;
eines von den ersten Kopplungselementen und den zweiten Kopplungselementen Öffnungen (34) umfasst und das andere von den ersten Kopplungselementen und den zweiten Kopplungselementen Klappen (14) umfasst, wobei jede Klappe (14) im gekoppelten Zustand mit einer entsprechenden Öffnung (34) in Eingriff steht;
wobei die Klappen (14) in ersten Querträgern (20) ausgebildet sind und die Öffnungen (34) in zweiten Querträgern (40) ausgebildet sind, und
die ersten Querträger (20) und die zweiten Querträger (40) Hohlprofile umfassen.

2. Batteriegehäuse (100) nach Anspruch 1, wobei die ersten und die zweiten Kopplungselemente derart ausgelegt sind, dass das Schutzelement (30) mechanisch von der unteren Abdeckung (10) entkoppelt wird, indem das Schutzelement (30) in einer zweiten Richtung (D2) entgegengesetzt zur ersten Richtung (D1) entlang der unteren Abdeckung (10) verschoben wird.

3. Batteriegehäuse (100) nach einem der Ansprüche 1 bis 2, wobei die Öffnungen (34) in einer oder mehreren parallelen Reihen (R1, R2, R3) und die Klappen (14) in einer gleichen Anzahl von parallelen Reihen (L1, L2, L3) angeordnet sind, wobei sich die Reihen (R1, R2, R3; L1, L2, L3) im gekoppelten Zustand gegenseitig überlappen.

4. Schutzanordnung (1) nach einem der Ansprüche 3 bis 4, wobei sich die ersten Querträger (20) und die zweiten Querträger (40) im gekoppelten Zustand senkrecht zueinander erstrecken.

5. Batteriegehäuse (100) nach einem der Ansprüche 1 bis 4, wobei die zweiten Querträger (40) Kontaktabschnitte (42), die mit der entsprechenden Fläche (32) verbunden sind, und einen vorstehenden Abschnitt (44) umfassen, der das Hohlprofil bildet, wobei die Öffnung (34) in den vorstehenden Abschnitten (44) derart ausgebildet ist, dass die entsprechende Klappe (14) durch die Öffnung (34) hindurchgeht und der vorstehende Abschnitt (44) im gekoppelten Zustand mit der Klappe (14) überlappt.

6. Batteriegehäuse (100) nach Anspruch 5, wobei der vorstehende Abschnitt (44) einen ebenen Abschnitt (45) umfasst, der parallel zu der entsprechenden Fläche (32) verläuft, wobei die Klappe (14) dazu ausgebildet ist, mit dem ebenen Abschnitt (45) derart in Kontakt zu stehen, dass sich zumindest ein Teil der Klappe (14) im gekoppelten Zustand zwischen dem ebenen Abschnitt (45) und der entsprechenden Fläche (32) befindet.

7. Batteriegehäuse (100) nach einem der Ansprüche 1 bis 6, wobei die Klappen (14) in dem ersten Querträger (20) dazu ausgebildet sind, einen abgestuften Abschnitt (24) und einen ebenen Abschnitt (25), der mit dem abgestuften Abschnitt (24) verbunden ist, zu umfassen, wobei der ebene Abschnitt (25) eine offene Seite (26) gegenüber dem abgestuften Abschnitt (24) umfasst.

8. Batteriegehäuse (100) nach Anspruch 7, wobei die ersten Querträger (20) einen Versatz (OF) umfassen, der zwischen der offenen Seite (26) des ebenen Abschnitts (25) und einem Basisabschnitt (22) des ersten Querträgers (20) ausgebildet ist.

9. Batteriegehäuse (100) nach Anspruch 8, wobei der vorstehende Abschnitt (44) des zweiten Querträgers (40) durch den Versatz (OF) hindurchgeht, um im gekoppelten Zustand mit der Klappe (14) zu überlappen.

10. Batteriegehäuse (100) nach einem der Ansprüche 1 bis 9, wobei der erste Querträger (20) mit der unteren Abdeckung (10) verschweißt ist und der zweite Querträger (40) mit dem Schutzelement (30) verschweißt ist.

11. Batteriesystem, umfassend ein Batteriegehäuse (100) nach einem der Ansprüche 1 bis 10.

12. Fahrzeug (300), umfassend ein Batteriesystem nach Anspruch 11, das in einem Unterboden des Fahrzeugs (300) angeordnet ist.

## Revendications

1. Boîtier de batterie (100), comprenant :
- un couvercle inférieur (10) ;
- un élément de protection (30) qui se trouve sous le couvercle inférieur (10) dans un état couplé ;
dans lequel le couvercle inférieur (10) comprend une pluralité de premiers éléments de couplage formés sur une première surface (12) du couvercle inférieur (10) et l'élément de protection (30) comprend une pluralité de seconds éléments de couplage formés sur une seconde surface (32) de l'élément de protection (30), les première et seconde surfaces (12, 32) se font face l'une l'autre dans l'état couplé, et les premier et second éléments de couplage sont adaptés de telle sorte que l'élément de protection (30) est mécaniquement couplé au couvercle inférieur (10) en faisant glisser l'élément de protection (30) dans une première direction (D1) le long du couvercle inférieur (10) jusqu'à ce que chacun des seconds éléments de couplage vienne en prise avec des premiers éléments de couplage correspondants ;
**caractérisé en ce que** :
l'un parmi les premiers éléments de couplage et les seconds éléments de couplage comprend des ouvertures (34) et l'autre parmi les premiers éléments de couplage et les seconds éléments de couplage comprend des rabats (14), dans lequel chaque rabat (14) vient en prise avec une ouverture correspondante (34) dans l'état couplé ;
dans lequel les rabats (14) sont formés dans des premières traverses (20) et les ouvertures (34) sont formées dans des secondes traverses (40) ; et
les premières traverses (20) et les secondes traverses (40) comprennent des profilés creux.

2. Boîtier de batterie (100) selon la revendication 1, dans lequel les premier et second éléments de couplage sont adaptés de telle sorte que l'élément de protection (30) est mécaniquement découplé du couvercle inférieur (10) en faisant glisser l'élément de protection (30) dans une seconde direction (D2) opposée à la première direction (D1) le long du couvercle inférieur (10).

3. Boîtier de batterie (100) selon l'une des revendications 1 à 2, dans lequel les ouvertures (34) sont disposées en une ou plusieurs rangées parallèles (R1, R2, R3) et les rabats (14) sont disposés en un même nombre de rangées parallèles (L1, L2, L3), dans lequel les rangées (R1, R2, R3 ; L1, L2, L3) se chevauchent les unes les autres dans l'état couplé.

4. Ensemble de protection (1) selon l'une quelconque des revendications 3 à 4, dans lequel les premières traverses (20) et les secondes traverses (40) s'étendent perpendiculairement les unes aux autres dans l'état couplé.

5. Boîtier de batterie (100) selon l'une des revendications 1 à 4, dans lequel les secondes traverses (40) comprennent des parties de contact (42) reliées à la surface correspondante (32) et une partie en saillie (44) formant le profilé creux, dans lequel l'ouverture (34) est formée dans les parties en saillie (44) de telle sorte que le rabat correspondant (14) passe à travers l'ouverture (34) et la partie en saillie (44) chevauche le rabat (14) dans l'état couplé.

6. Boîtier de batterie (100) selon la revendication 5, dans lequel la partie en saillie (44) comprend une partie plane (45) qui est parallèle à la surface correspondante (32), dans lequel le rabat (14) est formé pour entrer en contact avec la partie plane (45) de telle sorte qu'au moins une partie du rabat (14) se trouve entre la partie plane (45) et la surface correspondante (32) dans l'état couplé.

7. Boîtier de batterie (100) selon l'une quelconque des revendications 1 à 6, dans lequel les rabats (14) dans la première traverse (20) sont formés pour comprendre une partie étagée (24) et une partie plane (25) reliée à la partie étagée (24), la partie plane (25) comprenant un côté ouvert (26) opposé à la partie étagée (24).

8. Boîtier de batterie (100) selon la revendication 7, dans lequel les premières traverses (20) comprennent un décalage (OF) formé entre le côté ouvert (26) de la partie plane (25) et une partie de base (22) de la première traverse (20).

9. Boîtier de batterie (100) selon la revendication 8, dans lequel la partie en saillie (44) de la seconde traverse (40) passe à travers le décalage (OF) pour chevaucher le rabat (14) dans l'état couplé.

10. Boîtier de batterie (100) selon l'une quelconque des revendications 1 à 9, dans lequel la première traverse (20) est soudée au couvercle inférieur (10) et la seconde traverse (40) est soudée à l'élément de protection (30).

11. Système de batterie comportant un boîtier de batterie (100) selon l'une des revendications 1 à 10.

12. Véhicule (300) comprenant un système de batterie selon la revendication 11 positionné dans un bas de caisse du véhicule (300).
